# EUROPEAN PATENT APPLICATION

(11) **EP 1 780 673 A1**
(43) Date of publication of application: **02.05.2007**
(21) Application number: 05765443.6
(22) Date of filing: 28.06.2005
(51) Int. Cl.: G06T 7/00

(54) **IMAGE PROCESSING DEVICE, IMAGE PROCESSING METHOD, IMAGE PROCESSING PROGRAM, AND RECORDING MEDIUM ON WHICH THE PROGRAM IS RECORDED**

(30) Priority: 22.07.2004 JP 2004214920
(71) Applicant: National University Corporation Nara Institute of Science and Technology, Ikoma-shi, Nara 630-0192 (JP)
(72) Inventor: UKITA, Norimichi, National University Corporation, Ikoma-shi, Nara 6300192 (JP)
(74) Representative: Müller-Boré & Partner Patentanwälte
(86) International application number: PCT/JP2005/012282
(87) International publication number: WO 2006/008944

(57) **Abstract**

An image processing device, an image processing method, an image processing program, and a recording medium on which the program is recorded, which can accurately identify a plurality of regions included in an image by integrating the background difference method and the color detection method, are provided. First, background image data including only background region 1 imaged by a camera 3 is obtained. Then, the coordinates of the pixels of the background image data and the color gradation values of the pixels are structured and stored in a structured data storage section 13 to form a background color region. Next, input image data including the background region 1 and object regions 2 imaged by the camera 3 is obtained. Then, distances between the color gradation values of the pixels and the background color region in a identification space are calculated in a class identification section 14. Based on the calculated distances, the color gradation values of the pixels are identified whether they belong to the background color region or color regions other than the background in the class identification section 14.

## Description

### TECHNICAL FIELD

The present invention relates to an image processing device, an image processing method, an image processing program, and a recording medium on which the program is recorded, which can identify a plurality of regions included in an image.

### BACKGROUND ART

How to detect an object (target) such as a moving body from a monitored image is one of important challenges in computer vision. Among the methods developed for addressing such challenges, color detection method which detects a certain color in an image, and a background difference method which detects a region which experiences a change from a background image which is prepared in advance are used as basic techniques of target detection.

In color detection method, an appropriate threshold can be set for each of target colors. Thus, a subtle difference in colors can be identified.

The background difference method does not require a prior knowledge about a target for detecting the target. The method can also model a change in the background colors for each pixel. Because of such advantages, the background difference method is used in more vision systems than an interframe difference method which cannot detect a static region or a face detection or skin color detection method which can detect only previously defined targets. Particularly, good results can be expected under the conditions which allow sufficient learning on the background information in advance.

Recently, the background difference method and the color detection method utilizing nearest neighbor classification are tried to be organically integrated in search of a method which is robust to background change and can detect a subtle difference in colors of the background and any target (see, for example, Takekazu KATO, Tomoyuki SHIBATA and Toshikazu WADA : "Integration between Background Subtraction and Color Detection based on Nearest Neighbor Classifier" Research Report from the Information Processing Society of Japan, CVIM-142-5, Vol. 145, no.5, pp.31-36, Jan. 2004).

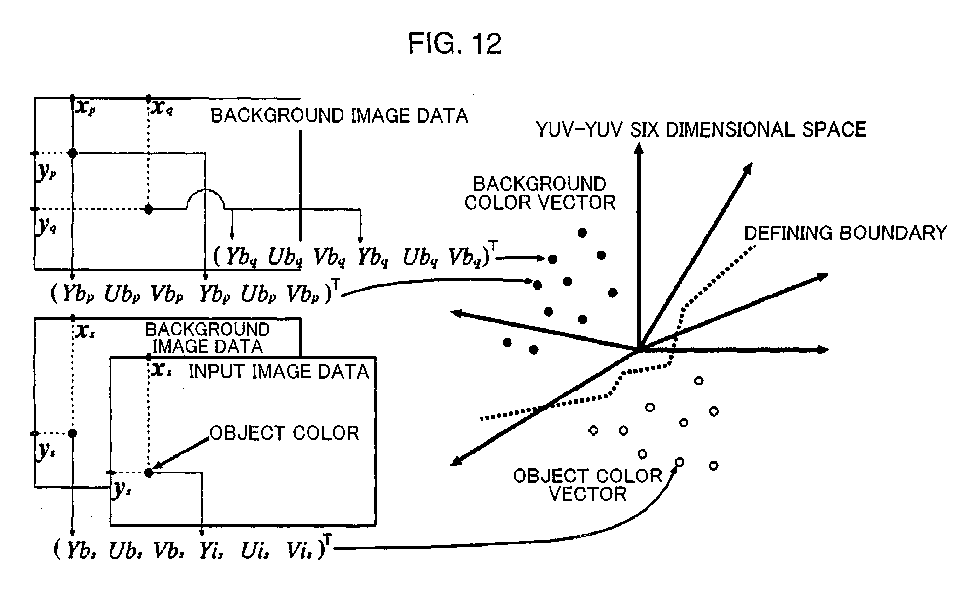

In the method described in the above reference, as shown in Figure 12, a color of a pixel (color gradation value) is represented in a six dimensional YUV color space (identification space). Specifically, when a three dimensional color of a pixel of the background image data which is obtained by imaging a background region at a coordinate (xₚ, yₚ) is (Ybₚ, Ubₚ, Vbₚ), the background color is represented by a six dimensional vector (Ybₚ, Ubₚ, Vbₚ, Ybₚ, Ubₚ, Vbₚ)^{T} in an identification space (T represents a transposition of the vector). Similarly, when a three dimensional color of a pixel of the background image data at a coordinate (x_{q}, y_{q}) is (Yb_{q}, Ub_{q}, Vb_{q}), the background color is represented by a six dimensional vector (Yb_{q}, Ub_{q}, Vb_{q}, Yb_{q}, Ub_{q}, Vb_{q})^{T} in the identification space. The background image data (background color vector) represented by six dimensional vectors in the identification space forms a background color region.

When a three dimensional color of a pixel of input image data which is obtained by imaging a background region and an object region at a coordinate (xₛ, yₛ) is (Yiₛ, Uiₛ, Viₛ), the input color is represented by a six dimensional vector (Ybₛ, Ubₛ, Vbₛ, Yiₛ, Uiₛ, Viₛ)^{T} in the identification space. By applying the nearest neighbor classification process in the six dimensional space to the six dimensional vector obtained in this way, the input color is identified whether it is in the background color region or an object color (target color) region. The six dimensional vector (Ybₛ, Ubₛ, Vbₛ, Yiₛ, Uiₛ, Viₛ)^{T} identified to be in the object color region is called object color vector, and the boundary between the background color region and the object color region is called defining boundary.

In this method, the number of dimensions is larger than usual (three dimensions). Thus, more processing time is required. However, by efficiently using a cache for the nearest neighbor classification, a real time operation can be achieved.

Yet, the background difference method has a problem that it cannot accurately distinguish the background and the target when there is a change in how a background body is seen due to a change in illumination (change in illumination intensity or a color) or a shade, or when there is a non-static region, for example, a moving leaf or flag in the background. The background difference method further has a problem that detection of a target having a color similar to that of the background is difficult.

In the color detection method, each of the target colors is compared to a set of colors in all the pixels of the background image. Thus, a set of an enormous number of colors is handled for identification. Accordingly, the distance between the different classes inevitably becomes small, and the performance in the identification deteriorates (lack of position information). Furthermore, since the target colors are provided manually, there is a problem that the method cannot be applied as it is to the target detection system which automatically operates (non-automatic property).

In the method disclosed in the above reference, which is obtained by integrating the background difference method and the color detection method, only one background image is referred to. Thus, there is a problem that a change in illumination cannot be addressed. Even a set of the background images under various illumination conditions are recorded, there is no criteria for successively selecting an appropriate background image for reference in the current method. Further, since the background information is represented as independent YUV values, there is no position information. In other words, concurrency among the neighboring pixels is not taken into consideration at all. Furthermore, there is a problem that the manual operation is required for designating an appropriate target color.

### DISCLOSURE OF THE INVENTION

The present invention is to solve the above-described problems, and an object thereof is to provide an image processing device, an image processing method, an image processing program, and a recording medium on which the program is recorded, which can handle not only a constant background change but also a rapid and large change in illumination, and can detect a small difference in the background colors and the target colors by integrating the background difference method and the color detection method.

In order to achieve the above object, an image processing device according to one embodiment of the present invention preferably includes: imaging means for imaging a predetermined region and converting into image data; background color storage means for structuring and storing coordinates of pixels in background image data consisting of a background region imaged by the imaging means and color gradation values of the pixels in an identification space and forming a background color region; class identification means for calculating distances between the color gradation values of the pixels in input image data formed of a background region and an object region imaged by the imaging means and the background color region in the identification space and identifying whether the color gradation values of the pixels of the input image data belong to the background color region or color regions other than the background based on the calculated distances; and object color storage means for structuring and storing the color gradation values of the pixels and coordinates of the pixels when the color gradation values of the pixels are determined to belong to the color regions other than the background by the class identification means.

According to such an embodiment, first, background image data including only the background region imaged is obtained by the imaging means. Then, the coordinates of the pixels of the background image data and the color gradation values of the pixels are structured and stored in the identification space by the background color storage means. A set of the background image data in the identification space is referred to as background color region. Next, input image data including the background region and object region imaged is obtained by the imaging means. Then, distances between the color gradation values of the pixels of the input image data and the background color region are calculated in the identification space. Based on the calculated distances, the color gradation values of the pixels of the input image data are identified whether they belong to the background color region or color regions other than the background by the class identification means. When the color gradation values of the pixels are determined to belong to the color regions other than the background by the class identification means, the color gradation values of the pixels and the coordinates of the pixels are structured and stored in the identification space by the object color storage means.

In other words, a plurality of background image data can be utilized, and the coordinates of the pixels in the image data and the color gradation values of the pixels are structured and stored in the identification space. Thus, not only color information but also position information is retrieved. As a result, not only a constant background change but also a rapid and large change in illumination can be handled, and detection of a small difference in the background colors and the target colors becomes possible.

In order to achieve the above object, an image processing method according to an embodiment of the present invention preferably includes: imaging step for imaging a predetermined region and converting into image data; background color storing step for structuring and storing coordinates of pixels in background image data consisting of a background region imaged by a process at the imaging step and color gradation values of the pixels in an identification space and forming a background color region; class identifying step for calculating distances between the color gradation values of the pixels in input image data formed of a background region and an object region imaged by a process at the imaging step and the background color region in the identification space and identifying whether the color gradation values of the pixels of the input image data belong to the background color region or color regions other than the background based on the calculated distances; and object color storing step for structuring and storing the color gradation values of the pixels and coordinates of the pixels when the color gradation values of the pixels are determined to belong to the color regions other than the background by a process at the class identifying step.

According to such an embodiment, by integrating the background difference method and the color detection method, an image processing method which can handle not only a constant background change but also a rapid and large change in illumination, and can detect a small difference in the background colors and the target colors can be provided.

In order to achieve the above object, a computer readable recording medium according to an embodiment of the present invention is preferably a computer readable recording medium including a program to be run on a computer to carry out the steps including: imaging step for imaging a predetermined region and converting into image data; background color storing step for structuring and storing coordinates of pixels in background image data consisting of a background region imaged by a process at the imaging step and color gradation values of the pixels in an identification space and forming a background color region; class identifying step for calculating distances between the color gradation values of the pixels in input image data formed of a background region and an object region imaged by a process at the imaging step and the background color region in the identification space and identifying whether the color gradation values of the pixels of the input image data belong to the background color region or color regions other than the background based on the calculated distances; and object color storing step for structuring and storing the color gradation values of the pixels and coordinates of the pixels when the color gradation values of the pixels are determined to belong to the color regions other than the background by a process at the class identifying step.

According to such an embodiment, by integrating the background difference method and the color detection method, a recording medium including a computer readable program which relates to an image processing method which can handle not only a constant background change but also a rapid and large change in illumination, and can detect a small difference in the background colors and the target colors can be provided.

In order to achieve the above object, a program according to an embodiment of the present invention is preferably a program to be run on a computer to carry out the steps including: imaging step for imaging a predetermined region and converting into image data; background color storing step for structuring and storing coordinates of pixels in background image data consisting of a background region imaged by a process at the imaging step and color gradation values of the pixels in an identification space and forming a background color region; class identifying step for calculating distances between the color gradation values of the pixels in input image data formed of a background region and an object region imaged by a process at the imaging step and the background color region in the identification space and identifying whether the color gradation values of the pixels of the input image data belong to the background color region or color regions other than the background based on the calculated distances; and object color storing step for structuring and storing the color gradation values of the pixels and coordinates of the pixels when the color gradation values of the pixels are determined to belong to the color regions other than the background by a process at the class identifying step.

According to such an embodiment, by integrating the background difference method and the color detection method, a program which relates to an image processing method which can handle not only a constant background change but also a rapid and large change in illumination, and can detect a small difference in the background colors and the target colors can be provided.

Objects, features, aspects and advantages of the present invention will become clearer based on the following detailed descriptions and the attached drawings.

### BRIEF DESCRIPTION OF THE DRAWINGS

Figure 1 is a functional block diagram showing an embodiment of an image processing device according to the present invention.
Figures 2A and 2B are flow diagrams showing a flow of a process in an embodiment of an image processing device according to the present invention. Figure 2A shows a process of forming a background color region and Figure 2B shows a process of detecting an object region.
Figure 3 is a schematic diagram showing a xy-YUV five dimensional space in an embodiment of the present invention.
Figures 4A and 4B are schematic diagrams showing a three dimensional YUV space at a pixel (xₚ, yₚ). Figure 4A shows a result when target color learning is insufficient, and Figure 4B shows a result when target color learning is sufficient.
Figure 5 is schematic diagrams showing an embodiment which resamples pixels of xy axes and gradations of YUV axes. (a) of Figure 5 shows pixels of image data; (b) of Figure 5 shows a state after space resampling; (c) of Figure 5 shows a state after gradation resampling; and (d) of Figure 5 shows a state after space weighting.
Figures 6A and 6B show background regions with which experiments are conducted. Figure 6A shows the background region with illumination being on and Figure 6B shows the background region with the illumination being off.
Figures 7A through 7C show results of target detections by the background difference method using an input image when the illumination is on. Figure 7A shows an input image; Figure 7B shows a result with a small difference threshold; and Figure 7C shows a result with a large difference threshold.
Figures 8A through 8E show results of target detections by the background difference method using an input image when the illumination is off. Figure 8A shows an input image; Figure 8B shows a result with a small difference threshold; Figure 8C shows a result with a large difference threshold; Figure 8D shows a result with small difference threshold; and Figure 8E shows a result with a large difference threshold.
Figures 9A through 9C show results of target detections by the background difference method using a Gaussian mixed model. Figure 9A shows a result when illumination is on; Figure 9B shows a result immediately after the illumination is turned off; and Figure 9C shows a result when the illumination is off.
Figures 10A through 10C show results of target detections by the image processing method according to the present invention when illumination is on. Figure 10A shows a result without target color learning; Figure 10B shows a result with a small amount of target color learning; and Figure 10C shows a result with a large amount of target color learning.
Figures 11A through 11C show results of target detections by the image processing method according to the present invention when illumination is off. Figure 11A shows a result without target color learning; Figure 11B shows a result with a small amount of target color learning; and Figure 11C shows a result with a large amount of target color learning.
Figure 12 is a schematic view showing YUV-YUV six dimensional space in a conventional image processing method.

### BEST MODE FOR CARRYING OUT THE INVENTION

Hereinafter, an embodiment of the present invention will be described with reference to the drawings.

### [Overview of the present embodiment]

The present invention relates to a method based on the background difference method. Thus, changes in a background which may take place when a target is being detected are all represented by a color distribution itself in a background image which has been taken in advance. Therefore, for improving a target detection performance, background changes which may take place have to be observed and collected as many as possible. However, there are an enormous number of patterns in how the background is seen. For example, there are reflections of all moving objects, slight changes in shadows due to movement of clouds, and the like. It is impossible to observe all of them in advance.

Accordingly, when a target is detected based on only the background information, a region which can be securely regarded as a region other than the background is detected since the background information is incomplete. When a target is detected based on background colors and target colors, even though background colors and target colors are similar to each other, identification robust to both isotropic errors and changes can be performed by nearest neighbor classification after the target colors are learnt.

### [Background region formation]

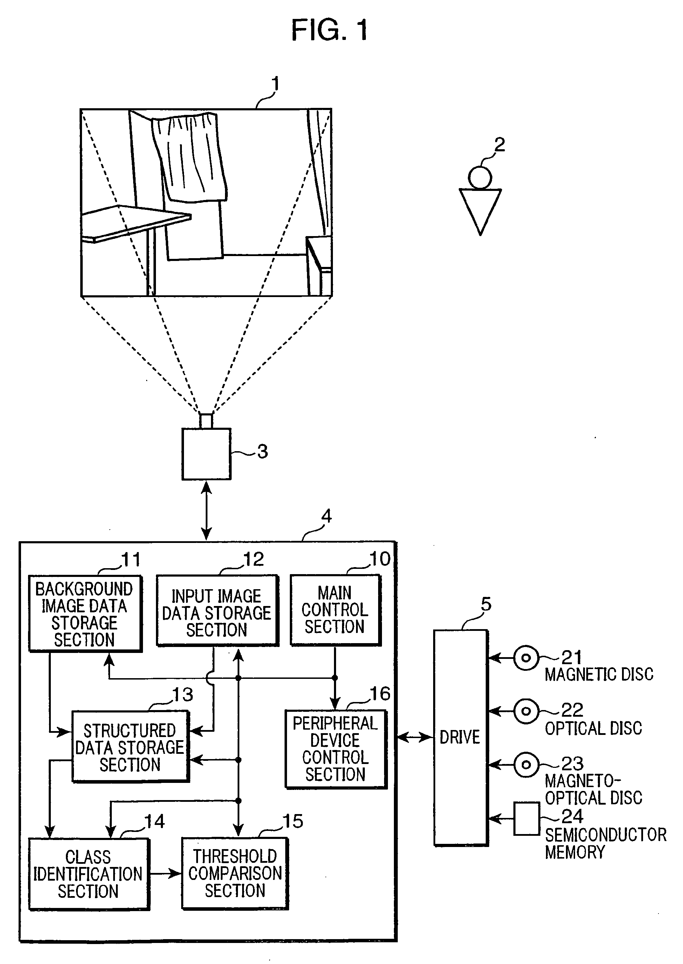

Figure 1 is a functional block diagram of an embodiment of an image processing device according to the present invention. A camera 3 fixed to a predetermined position images a rectangular background region 1 which is indicated by dotted lines or a region formed of the background region 1 and an object region 2. The camera 3 is connected to a control section 4. The camera 3 is controlled by the control section 4 and it outputs image data which it imaged and the like to the control section 4. A drive 5 is connected to the control section 4, and records the image data and the like output from the control section 4 on a recording medium.

For example, when the present invention is applied to an intelligent transport system (ITS), a predetermined region including a highway may be the background region 1 and a car running on the road may be the object region 2. When the present invention is applied to a monitoring system, an entrance of a house or an elevator hall may be the background region 1, and a person passing through the background region 1 may be the object region 2.

The camera 3 may be, for example, a digital still camera for taking still images, and may be a digital video camera for video shooting. The camera 3 includes charge coupled devices (CCD) as imaging devices. The camera 3 images an image in accordance with instructions by the control section 4, and outputs image data formed of pixel values I (x, y) to the control section 4. In the present embodiment, the pixel values I (x, y) are color data, and the color gradation values of the image data are represented based on YUV format. In the YUV format, a color of image data is represented by an intensity signal, Y, and color signals, U and V. Since the intensity signal and the color signals are separated in the YUV format, a high data compression rate can be achieved with less degradation in the image quality by allocating more data amount to the intensity signal Y. The YUV values (color gradation values) can be readily converted into RGB values according to the RGB format for representing the colors of the image data by three primary colors of the light, R (red), G (green), and B (blue), or other values according to other color representation formats.

In the present embodiment, the CCD is described as that of single-plate type with a YUV value given to each of the pixels. However, the CCD of the camera 3 may be of a three-plate type or a single-plate type. In the three-plate type, colors of the imaged image data is grouped into three primary colors, R, G, and B, for example, and a CCD is allocated to each of those colors. On the other hand, in the single-plate type, colors such as R, G, and B are collected and one CCD is allocated to the color.

The control section 4 is a functioning section which retrieves the image data imaged by the camera 3, and perform a predetermined process to the image data. The control section 4 further outputs data such as the image data to a drive 5. The control section 4 can install necessary information from a recording medium, on which various image data and programs are recorded, via the drive 5 and can perform functions thereof.

The control section 4 includes a main control section 10, a background image data storage section 11, an input image data storage section 12, a structured data storage section 13, a class identification section 14, a threshold comparison section 15, and a peripheral device control section 16.

The main control section 10 is connected to the background image data storage section 11, the input image data storage section 12, the structured data storage section 13, the class identification section 14, the threshold comparison section 15, and the peripheral device control section 16, and controls processes performed by these components.

The background image data storage section 11 is a functional section which stores image data of only the background region 1 which is imaged by the camera 3 (background image data). In the background image data storage section 11, YUV values are stored in association with the coordinates (x, y) of the pixels.

The input image data storage section 12 is a functional section for storing the image data formed of the background region 1 and the object region 2 which are imaged by the camera 3. In the input image data storage section 12, YUV values are stored in association with the coordinates (x, y) of the pixels as in the background image data storage section 11.

The structured data storage section 13 stores YUV values of the background image data in association with the coordinates (x, y) of the pixels. However, unlike the background image data storage section 11, the structured data storage section 13 structures and stores the YUV values of the number of background image data in association with one coordinate of a pixel. Further, the structured data storage section 13 structures and stores the coordinate (x, y) at the pixels which is determined to be included the object color region and the YUV values with respect to the each of the pixels of the input image data. Hereinafter, a color space with a YUV value being structured in association with the coordinate of a pixel is referred to as an identification space. The structured data storage section 13 functions as background color storage means and object color storage means.

The class identification section 14 is a functional section which determines whether a YUV value of each pixel of the input image data which is stored in the input image data storage section 12 belongs to the background color region or the object color region in the identification space. When it is determined that a YUV value belongs to the object color region, the class identification section 14 has the structured data storage section 13 store the YUV value. At the same time, the class identification section 14 calculates a distance from a YUV value of a pixel to the nearest neighboring point of the background color region in the identification space. The class identification section 14 functions as class identification means.

The threshold comparison section 15 is a functional section which compares the distance from the YUV value of the pixel to the nearest neighboring point in the background color region which is obtained at the class identification section 14 and threshold values Th_{b}.

The peripheral device control section 16 has a function to control the camera 3. For example, for taking still images, it sends an imaging signal to the camera 3 for imaging an image. The peripheral device control section 16 further includes a function to control the drive 5 such as outputting image data and/or programs to the drive 5 to be recorded on the recording medium, or inputting the image data and/or programs recorded on the recording medium via the drive 5.

The drive 5 receives data such as image data output from the control section 4, and outputs the data to various types of recording media. The drive 5 also outputs various image data, programs and the like recorded on the recording media to the control section 4. The recording media are formed of magnetic discs (including floppy discs) 21, optical discs (including compact discs (CDs) and digital versatile discs (DVDs)) 22, magneto-optical discs (including mini-discs (MD)) 23, semiconductor memory 24, or the like.

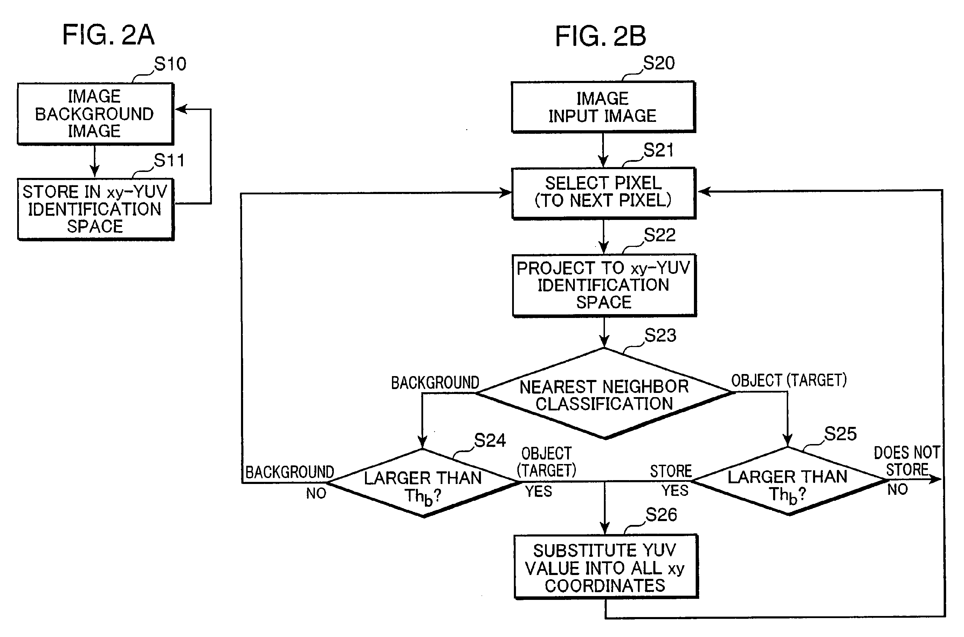

Figures 2A and 2B are flow diagrams showing a flow of a process in an embodiment of an image processing device according to the present invention. Hereinafter, functions and the flow of the process of one embodiment of the image processing device according to the present invention will be described with reference to Figures 1, 2A and 2B.

Now, a process of forming a background color region based on the background image data (S10 and S11 of Figure 2A) will be described.

First, only the background region 1 is imaged by the camera 3 for a plurality of times with the illumination condition or the like being changed (S10). The obtained background image data is output to the background image data storage section 11 in the control section 4 and is stored therein. In the background image data storage section 11, YUV values are stored in association with the coordinates (x, y) of the pixels of the background image data. Since a plurality of the background image data are imaged, there are a plurality of YUV values for the coordinate of one pixel. In order to represent such YUV values, in the present embodiment, xy-YUV five dimensional space (identification space) is considered, and the YUV values are stored in the space (S11).

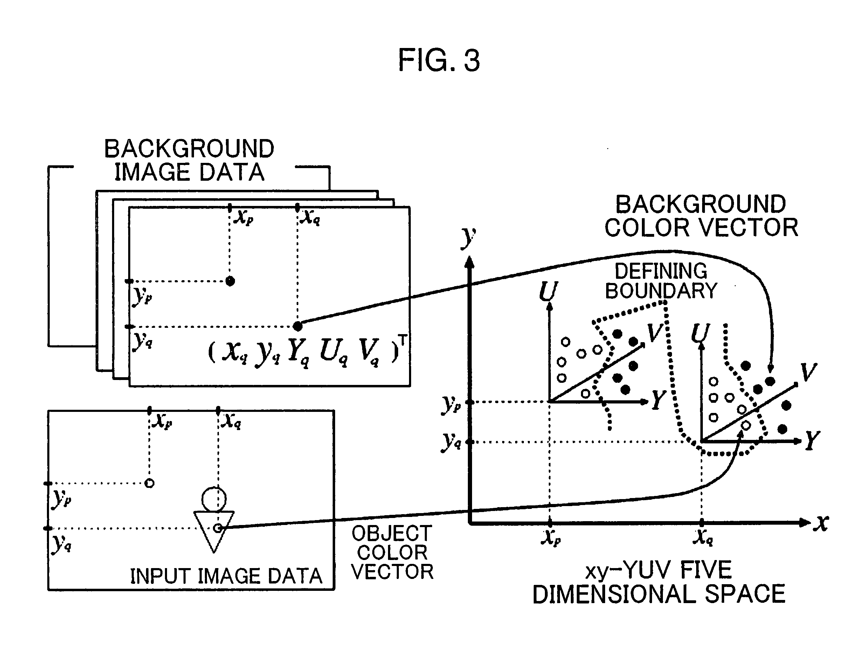

Figure 3 is a schematic diagram of the identification space in one embodiment of the present invention. The figure shows how to position the coordinates of the pixels and the YUV values of the plurality of the background image data and the input image data in the identification space. For example, when the YUV value of the pixel of the background image data at the coordinate of (x_{q}, y_{q}) is (Y_{q}, U_{q}, V_{q}), the xy coordinate and the YUV value are combined to form a five dimensional vector (x_{q}, y_{q}, Y_{q}, U_{q}, V_{q})^{T} (background color vector). Then, the five dimensional vector (x_{q}, y_{q}, Y_{q}, U_{q}, V_{q})^{T} is labeled as "background" in the identification space. Schematically, it can be considered that a YUV axis is provided for each of the (x, y) coordinate points. In other words, the coordinate (x_{q}, y_{q}) of the pixel of the background image data and the YUV value (color gradation value) (Y_{q}, U_{q}, V_{q}) of the pixel are structured in the identification space ((x_{q}, y_{q}, Y_{q}, U_{q}, V_{q})^{T}), and is labeled as the background color region. The structured five dimensional vector is stored in the structured data storage section 13.

### [Object region detection]

When the background color region formation in the identification space as described above (background learning) is finished, preparation for detecting the object region is finished. If color information of the object region is unknown, the object region detection is performed based on only the background color information.

Hereinafter, a process of determining whether the input image data belongs to the background color region or the object color region (S20 through S26 in Figure 2B) will be described.

First, an input image with the background region 1 and the object region 2 being overlapped is imaged by the camera 3 (S20). The obtained input image data is output to the input image data storage section 12 in the control section 4 and stored therein. In the input image data storage section 12, YUV values are stored in association with the coordinates (x, y) of the pixels of the input image data.

Then, the pixel (x_{q}, y_{q}) of the input image data is selected (S21), and the xy-YUV value of the pixel is projected to the identification space (S22). Specifically, the YUV values of the pixel of the coordinate (x_{q}, y_{q}) is received from the input image data storage section 12, all the YUV values for the same pixel of the coordinate (x_{q}, y_{q}) are further received from the structured data storage section 13, and they are compared to each other by the class identification section 14.

Next, in the class identification section 14, nearest neighbor classification is performed for the YUV values of the pixel (x_{q}, y_{q}) (S23). In the present embodiment, for simplifying the explanation, the classes to be identified are limited to two: the background and the target. Thus, the YUV values of the input image data can be identified to be either the background or the target as a result of the nearest neighbor classification. Further, in the class identification section 14, as the nearest neighbor class is determined, the distance to the nearest neighboring point which belongs to the background color region is calculated. The calculated distance to the nearest neighboring point is output to the threshold comparison section 15.

In the nearest neighbor classification, all the xy-YUV values are identified as the background in an initial state with no target color being recorded in the identification space. Thus, a threshold value Th_{b} (constant) is introduced as in the normal background difference method, and xy-YUV values having the distance to the nearest neighboring point larger than the threshold value Th_{b} is detected to be a color region other than the background (in the present embodiment, the object color region).

Now, an example in which the YUV value of the pixel of the input image data at the coordinate (x_{q}, y_{q}) is determined to belong to the background color region in the nearest neighbor classification of Figure 2B (S23) will be described. First, in the threshold comparison section 15, the distance to the nearest neighboring point obtained at the class identification section 14 and the threshold value Th_{b} are compared (S24). Then, if the distance to the nearest neighboring point is smaller than the threshold value Th_{b} (NO at S24), the YUV value of the input image data is identified to belong to the background color region, and the process moves to identification for the next pixel of the input image data (S21).

On the other hand, if it is determined that the distance to the nearest neighboring point is larger than the threshold value Th_{b} at the threshold comparison section 15 (YES at S24), the YUV value of the input image data is identified to belong to the object color region. In this case, the five dimensional vector (x_{q}, y_{q}, Y_{q}, U_{q}, V_{q})^{T} is referred to as an object color vector. This YUV value is stored to be in the object color region at xy coordinates of all the pixels in the identification space (S26), and the process moves to the identification for the next pixel of the input image data (S21).

As the object color vectors are successively stored in this way, the shape of the defining boundary which divides the background color region and the object color region changes.

Next, an example in which the YUV value of the pixel of the coordinate (x_{q}, y_{q}) of the input image data is determined to belong to the object color region in the nearest neighbor classification of Figure 2B (S23) will be described. First, in the threshold comparison section 15, the distance to the nearest neighboring point obtained at the class identification section 14 and the threshold value Th_{b} are compared (S25). Then, if the distance to the nearest neighboring point is smaller than the threshold value Th_{b} (NO at S25), the YUV value of the input image data is also close to the background color region. Thus, the value is not stored in the identification space, and the process moves to identification for the next pixel of the input image data (S21).

In other words, in the present embodiment, only a region which is determined "securely to be a region other than the background" is cut out, and colors in the region are recorded as the target colors, which will be used in the following identification process.

On the other hand, in the threshold comparison section 15, if it is determined that the distance to the nearest neighboring point is larger than the threshold value Th_{b} (YES at S25), the YUV value of the input image data is identified securely to belong to the object color region. This YUV value is stored to be in the object color region at coordinates of all the pixels in the identification space, and the process moves to the identification for the next pixel of the input image data (S21).

By repeating the above-described process, an object region can be distinguished from the background region.

As described above, in the present embodiment, when a YUV value of the input image data is identified to belong to the object color region, the YUV value is stored in the identification space. Thus, if there is any failure in the identification, the number of erroneous detection in the following nearest neighbor classification will increase. In order to avoid such a problem, it is preferable to use a sufficiently large threshold value Th_{b} at classification.

The threshold value Th_{b} can be sufficiently large because of the following reason. When a certain color in the background region and an object region having a color similar to that overlap each other, the object region cannot be detected at all with a large threshold value Th_{b}. However, the background difference method utilizing the threshold value Th_{b} is a process for ensuring detection of an object region in a region where the color of the background and the color of the target are largely different and for recording the colors in the detection area as the target colors in the identification space. The colors of the background and the target similar to each other are distinguished by the nearest neighbor classification. Thus, the threshold value Th_{b} can be sufficiently large to an appropriate extent.

In the present embodiment, the threshold value Th_{b} is described as a constant. This is for increasing the speed of the identification process. In this way, a real time process of identification becomes possible. However, the present invention is not limited to such an example. Threshold may be set appropriately depending upon changes in the background region.

In the above identification process, for example, when (xₚ, yₚ, Yₚ, Uₚ, Vₚ)^{T} is identified to be in the color region other than the background, (Yₚ, Uₚ, Vₚ) at all xy coordinates are classified to be the target color so as to ensure that (Yₚ, Uₚ, Vₚ) is identified as the target color even when it is observed at another xy coordinates. However, at another xy coordinate (x_{q}, y_{q}), (x_{q}, y_{q}, Yₚ, Uₚ, Vₚ)^{T} may be classified into the background color region. If the class of the (x_{q}, y_{q}, Yₚ, Uₚ, Vₚ)^{T} is changed to the target in such case, the coordinate (x_{q}, y_{q}) may often be detected erroneously. Such a problem can be avoided by the following process of registering a target color.

First, all the xy-YUV values having the YUV value (Yᵢ, Uᵢ, Vᵢ), which is identified to be the target color, as a color component, {(xᵢ, yᵢ, Yᵢ, Uᵢ, Vᵢ)^{T}} (herein, i is an element of a set having all image coordinates as an element), are subjected to the nearest neighbor classification.

Next, when the nearest neighbor classification is finished, only when the distance to the nearest neighboring point is larger than threshold value Thₜ, it is regarded that there is no overlap with the background color, and the xy-YUV value is classified as the target.

The threshold value Thₜ introduced herein can be zero if the background color region in the identification space can be trusted. In other words, the value may be classified as the target only when the YUV value completely matches. This is because, in the present invention, observation and learning of the background region is an off-line process, and thus, the reliability of the background color region in the identification space can be sufficiently improved until this stage of the process.

### [Successive update of the object color region]

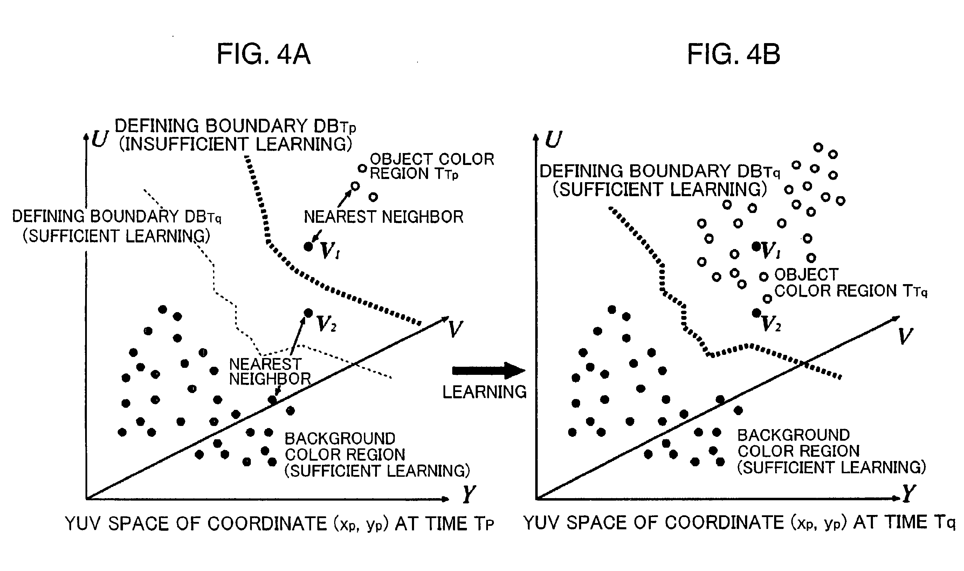

As target colors has been learnt, not only by the threshold process utilizing the threshold value Th_{b}, but also an xy-YUV value (xₚ, yₚ, Yₚ, Uₚ, Vₚ)^{T} identified as the target by the nearest neighbor classification appears. Figure 4A shows a three dimensional YUV space at a pixel (xₚ, yₚ) at time when a sufficient background learning is performed so the background region in the specification space is reliable but the target color learning is insufficient (time Tₚ). At time Tₚ, as indicated by V₁ in Figure 4A, a target color detection result by the nearest neighbor classification is highly reliable. Thus, the pixel (xₚ, yₚ) is detected as an object region. However, as indicated by V₂ in Figure 4A, it is not necessarily highly probable that the xy-YUV value identified as the background color by the nearest neighbor classification actually corresponds to the background.

In the example shown in Figure 4A, at time Tₚ when the target color learning is insufficient, V₁ which has a smaller distance to the object color region T_{Tp} which has been learnt even in a small amount of learning is identified as a target. However, V₂ which should be identified as the target is identified as the background. The problem can be solved automatically as the target color learning progresses. Figure 4B shows a three dimensional YUV space at the pixel (xₚ, yₚ) at time T_{q} when the sufficient target color learning has been performed. As can be seen from the figure, both V₁ and V₂ are identified as the targets.

Specifically, identification depends on the defining boundary which is a boundary dividing the background region and the object color region. As shown in Figure 4A, with insufficient learning, the number of vectors which belong to the object color region is small, and the defining boundary (with insufficient learning) DB_{Tp} is located near the object color region. Thus, V₂ which should be identified as the target is identified as the background. As the learning progresses, the defining boundary (with sufficient learning) DB_{Tq} moves closer to the background color region at time Tq. Thus, V₂ is also identified as the target.

Even though a certain xy-YUV value is identified as the target color by the nearest neighbor classification, it is not ensured that it has a large distance to the nearest neighbor background color region (that it can be securely confirmed to be the target color). Therefore, it is preferable to perform the above-described target color registration process also for the xy-YUV value identified as the target by the nearest neighbor classification when it is stored as the target color in the identification space.

### [Other preferable embodiments]

In the above-described embodiment, color gradation values of the image data are described to be represented according to the YUV format. However, the present invention is not limited to such an example. The values may be represented as RGB values according to the RGB format which represents colors of the image data by three primary colors of light, R(red), G(green), and B(blue), or in any other color representation formats. Alternatively, YUV values output from the camera may be converted into other color representation formats such as RGB values before performing the image processing according to the present invention, or values in other color representation formats such as RGB values which are output from the camera may be converted into YUV values before performing the image processing according to the present invention.

The present invention is not limited to color images. For example, the present invention can be applied to image data represented by a gray scale of 8 bits 256 gradations.

Further, the present invention is not limited to a combination of xy two dimensional coordinates which represent coordinates of the pixels and YUV three dimensional vectors which represent the color gradation. The present invention is also applicable to any other combination of the coordinates of the pixels and the vectors which represent the color gradation. For example, if pixels are arranged three dimensionally, xyz three dimensional coordinates representing the coordinates of pixels and vectors of any dimension which represent color gradation may be combined.

In the above description, the classes to be identified are limited to two: the background and the target. However, the present invention is not limited to such an example, and is also effective in identifying three or more classes.

In the above embodiment, a YUV value is projected to the identification space for every pixel, and target color detection is performed. However, among neighboring pixels, there is a high correlation in occurrence probability of the YUV values. Further, due to an influence of quantization error of the camera, values of lower bits of the YUV values have low reliability. Thus, even xy-YUV axes are sampled at the highest resolution which can be observed (every pixel for xy axes and every gradation for YUV axes), redundancy is high and an effect of improving the accuracy of the identification as the identification space is expanded cannot be expected. Thus, it is preferable to determine the sampling rate for each axis in view of a trade-off between the identification performance and the calculation cost.

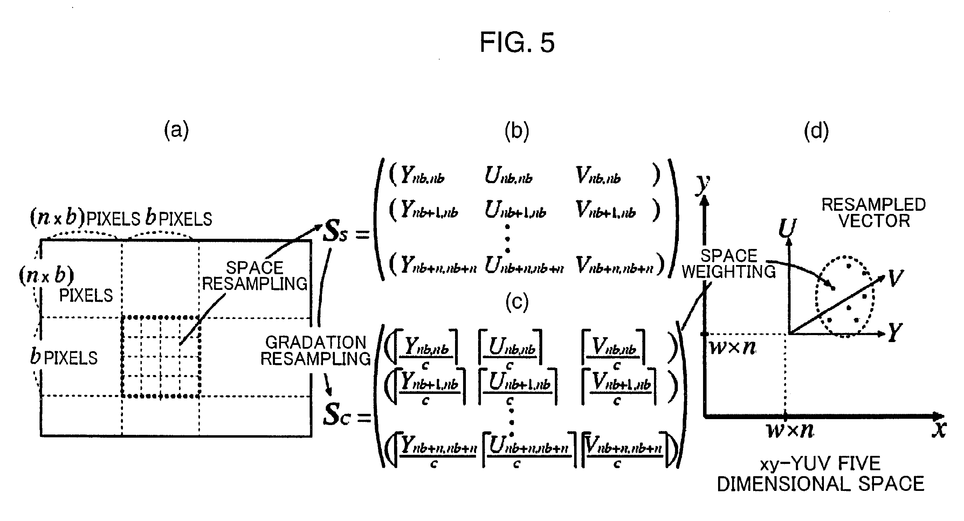

Figure 5 is schematic diagrams showing an embodiment where pixels of xy axes and gradations of YUV axes are resampled. (a) of Figure 5 shows pixels of image data, and (b) of Figure 5 shows a YUV set obtained by respectively resampling xy axes (space resampling). In (a) of Figure 5, xy axes are respectively resampled at 1/b to produce YUV set Sₛ shown in (b) of Figure 5. In this example, b=4. All YUV values in a block of 4 × 4 pixels are associated to one xy value in the identification space (for example, the coordinate of the pixel at the upper-left corner among the 4 × 4 pixels).

Next, every gradation of YUV axes is resampled at 1/c to obtain YUV set Sc shown in (c) of Figure 5 (gradation resampling). The sign [x] in the figure represents a maximum integer not larger than x.

In the present invention, the identification space is formed of information of different amounts, i.e., image coordinates xy and color gradations YUV. Thus, if respective distances between the axes are estimated uniformly for identifying the color based on the distances in the identification space, there may be an adverse influence on the identification result. Thus, the distances between the axes are weighted in view of the above-mentioned sampling rates as an adjustment for an appropriate identification.

In (d) of Figure 5, YUV set Sc sampled from the block of the order of (x=n,y=n) in the image is weighted by w in an xy axial direction unit length in xy-YUV space and are projected at (x=wn, y=wn). The weight has to be changed depending upon complexity of the input image in order to be precise. However, in general, there is no large difference in the identification result even when the weight is determined based on only the sampling rate of xy-YUV axes.

The resampling is merely an adjustment of the size of the identification space, and the size of the input image data is not reduced. Still, an efficient process can be performed with almost no reduction in the information amount. Thus, increasing the speed of the calculation becomes possible. Moreover, only a small amount of memory is required. Further, in space resampling, even when a color gradation value of a certain pixel is varied from the original value due to a noise, the influence caused by the variance is very small because the process is performed for the block including adjacent pixels.

For detecting a target, xy-YUV values associated to all the pixels are projected on the identification space based on the rules similar to those in the above-described background learning. The nearest neighbor classification is independently performed, which means that, if the image has 640 x 480 pixels, it is performed for 640 x 480 times.

A series of image processing as described above can be operated by software. For example, it may be realized by a computer having a program forming the software being incorporated into dedicated hardware. In the example shown Figure 1, the control section 4 and the drive 5 are the computer and the main control section 10 is the dedicated hardware.

Alternatively, the series of image processing may be realized by a computer for general-purpose use which can run various functions by installing a program which forms the software from a recording medium. In the example shown Figure 1, the control section 4 and the drive 5 are the computer for general-purpose use and the magnetic disc 21, the optical disc 22, magneto-optical disc 23 or the semiconductor memory 24 is the recording medium on which the program is recorded.

### [Example 1]

Hereinafter, an example for confirming effectiveness of the present invention against variances in the background region such as changes in illumination, movements of the background bodies and the like will be described.

As the present example, an example of image processing using a personal computer (PC) of Pentium 4-2.4 GHz as the control section 4 and the drive 5 of Figure 1 and an IEEE 1394 camera DFW-VL500 which is available from Sony Corporation as the camera 3 of Figure 1 is shown. The input image data is YUV image of 640 × 480 pixels.

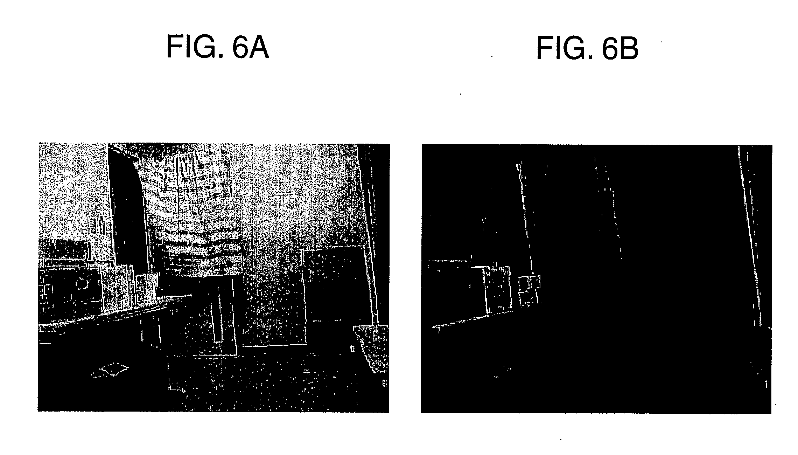

Figures 6A and 6B show a background region with which experiments are conducted. Figure 6A shows the background region with illumination being on and Figure 6B shows the background region with the illumination being off. Due to changes in sunshine, shades and shadows on walls and a floor slightly change. A curtain shown in an upper left portion of the screen stirs due to a wind.

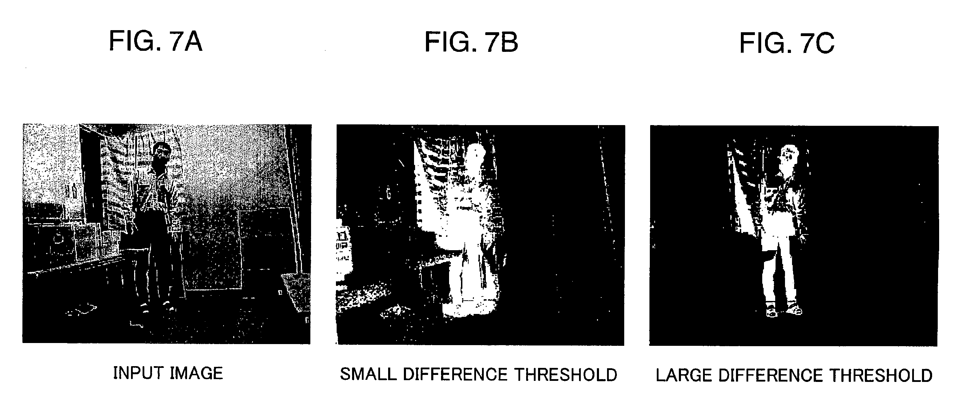

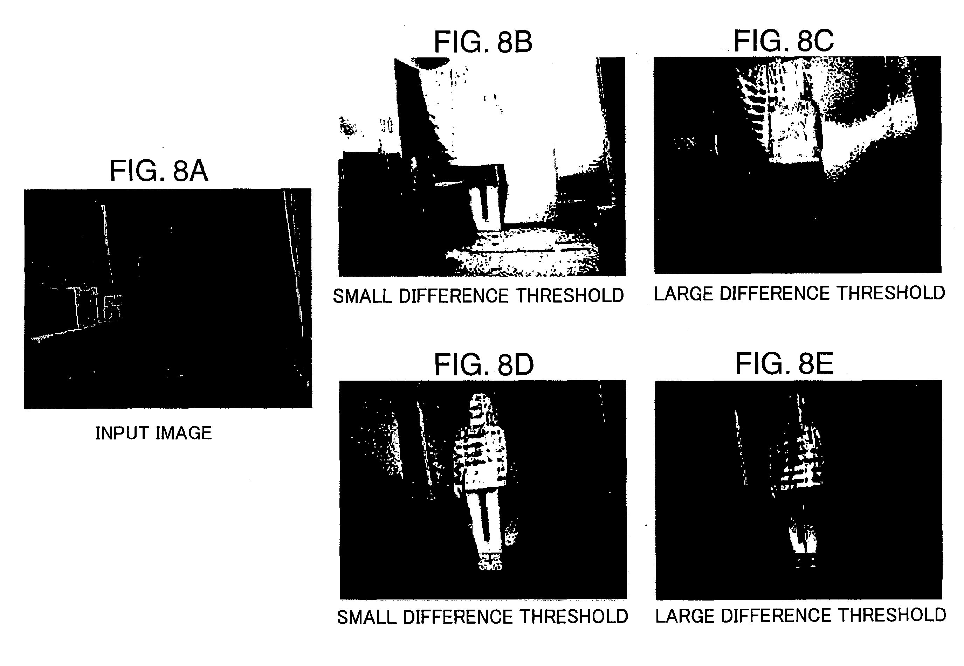

Figures 7A through 8E show detection results by the background difference method using constant thresholds. Figures 7B, 8B and 8D show the detection results when the thresholds which can be manually set are set to be small such that "an entire object region is detected as much as possible". On the other hand, Figures 7C, 8C, and 8E show detection results when the thresholds which can be set manually are set to be large such that "the number of erroneous detections becomes as small as possible". The thresholds for all the results are different from each other.

Figures 7B and 7C show results with the threshold values being modified in a detection for a difference between Figure 6A (illumination on) and Figure 7A. By setting an appropriate threshold, a comparatively good result as shown in Figure 7C can be obtained. However, there is an erroneous detection due to a movement of a curtain in Figures 6A and 7A. Figures 8B and 8C show results with the threshold values being modified in detection for a difference between Figure 6A (illumination on) and Figure 8A. Since the illumination condition of the input image changes rapidly, there is a significant erroneous detection even the threshold is being adjusted.

Figures 8D and 8E show results with the threshold values being modified in a difference result of Figure 6B (illumination off) and Figure 8A. As can be seen from the figures, even a static background image which is suitable for the input image is given, if the illumination is turned off and the entire image is dark, the detection result is affected largely by a small difference in the threshold since the difference between the background color and the target color is small.

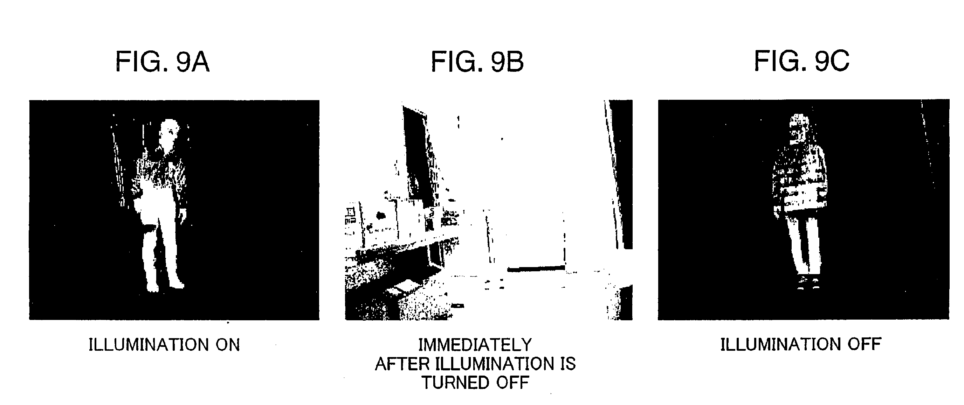

Next, Figures 9A through 9C show results of detection by the background difference method using a Gaussian mixed model. Figure 9A shows a detection result from Figure 7A (illumination on). It shows the detection result after the background model has been adapted sufficiently to the illumination condition. The result shown in Figure 9A has substantially no erroneous detection of a non-static background body compared to the examples shown in Figures 7B and 7C where a process using a constant threshold is performed for all the pixels. However, as shown in Figure 9B, when detection is performed from Figure 8A (illumination off) using the background model adapted for the state where the illumination is on, erroneous detection occurs.

This means that erroneous detection occurs since the update of the background model cannot be made in time immediately after the illumination is turned off. When detection threshold is determined from the background model which is updated sufficiently so as to conform to the background image set for the illumination being off, the result better than the results obtained by the simple background difference method (Figures 8B, 8C, 8D, and 8E) can be obtained as shown in Figure 9C.

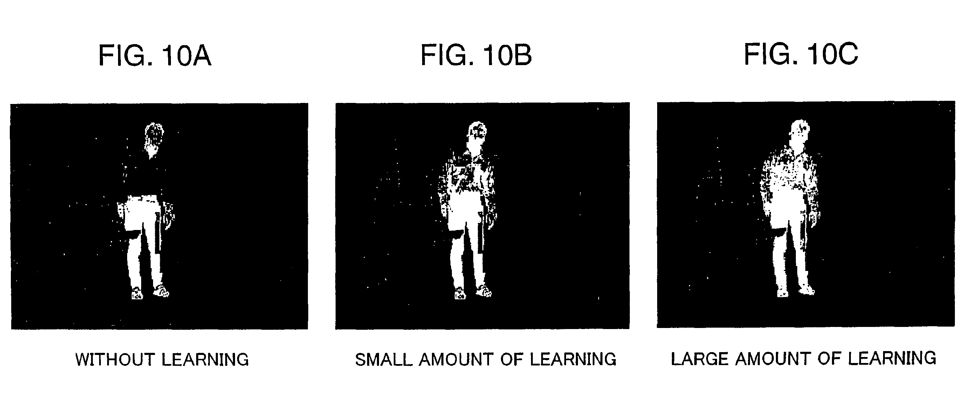

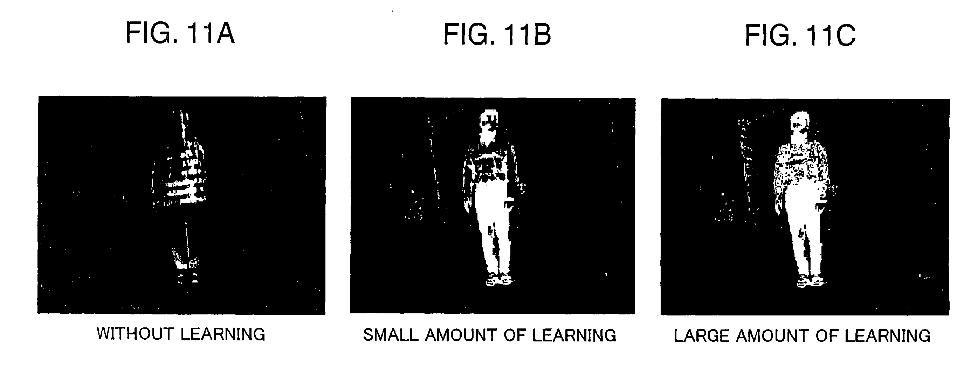

Lastly, Figures 10A through 10C (illumination on) and Figures 11A through 11C (illumination off) show detection results by the image processing method according to the present invention. The speed of the nearest neighbor classification in the xy-YUV space is increased by effective caching using a hash table. Use of a hash table allows a high-speed processing even when a data amount increases because access from the key object to the associated object is rapid.

Furthermore, x axis and y axis are respectively resampled at 1/8 (for x axis, 80 pixels from 640 pixels, and for y axis, 60 pixels from 480 pixels), and YUV axes are respectively resampled at a half of gradations (128 from 256). The x and y axes are weighted by two such that a ratio of the unit length of the xy axes and YUV axes becomes 2:1. In other words, b, c, and w mentioned above satisfy the expressions, b=8, c=2, and w=2.

In the present example, five types of the background images with the illumination being turned on and off as shown in Figures 6A through 6C are respectively taken in advance. All the xy-YUV values in ten images in total are recorded in one identification space. In these images, shades on the walls and the floor slightly change, and the curtain stirred by the wind is taken in various shapes.

In the present example, the target moves back and forth within the image for several times. Sufficient target color learning has been conducted during this time period. For confirming the change in the detected result depending upon the amount of learning the target color, target detection is performed for a certain input image under three different conditions: A) without target color learning; B) small amount of target color learning; and C) large amount of target color learning. The results are respectively shown in Figures 10A through 10C and Figures 11A through 11C. Figure 10A and Figure 11A, Figure 10B and Figure 11B, and Figure 10C and Figure 11C show detection results obtained based on the same background color and target color data, respectively. It is not that different identification data suitable for each of the conditions where the illumination is turned on and off are prepared.

The detection results from Figure 7A (illumination on) and Figure 8A (illumination off) are respectively shown in Figures 10A through 10C and Figures 11A through 11C. However, the image processing method according to the present invention includes no manual process such as setting of an appropriate threshold by a human as in the simple background difference method shown in Figures 7A through 8E. In other words, target detection is performed by an automatic operation in the present example.

As shown in Figures 10A and 10B, and in Figures 11A and 11B, when the amount of learning the target color is not sufficient, there is a large amount of missed detection in regions where background color and the color in the object region are similar (regions where the curtain and a shirt overlap). However, as shown in Figures 10C and 11C, in the detection result after the sufficient amount of learning the target color, the rate of detection in the object region having the color similar to the background color is improved, and the results significantly better than those by other methods are achieved.

Most of the missed detections in Figure 10C are in the region where the target color completely saturates due to the illumination. It is impossible to distinguish from the background region which also has completely saturated color based on only the color information. The operation speed after the target color learning depends on the performance of the PC, but, currently, the value close to 10 fps is achieved. Thus, real time target detection is well realizable.

As described above, according to the present invention, an image processing device, an image processing method, and an image processing program and a recording medium on which the program is recorded which are combinations of the background difference method and the target color detection method and allow real time target detection in any object region can be provided. In the present invention, the nearest neighbor classification in the five dimensional space formed of xy axes of the image and YUV axes of the color is used to form the identification space which addresses to both a spatial distribution of the background image colors and a distribution of the target colors to realize appropriate setting of the threshold in background difference method. As a result, not only a constant background change but also a rapid and large change in illumination can be handled, and detection of a small difference in the background colors and the target colors becomes possible.

### [Overview of embodiments]

Hereinafter, overview of the embodiments of the present invention will be described.
(1) As described above, an image processing device according to the present invention preferably includes: imaging means for imaging a predetermined region and converting into image data; background color storage means for structuring and storing coordinates of pixels in background image data consisting of a background region imaged by the imaging means and color gradation values of the pixels in an identification space and forming a background color region; class identification means for calculating distances between the color gradation values of the pixels in input image data formed of a background region and an object region imaged by the imaging means and the background color region in the identification space and identifying whether the color gradation values of the pixels of the input image data belong to the background color region or color regions other than the background based on the calculated distances; and object color storage means for structuring and storing the color gradation values of the pixels and coordinates of the pixels when the color gradation values of the pixels are determined to belong to the color regions other than the background by the class identification means.
   According to such a structure, first, background image data including only the background region imaged by the imaging means is obtained. Then, the coordinates of the pixels of the background image data and the color gradation values of the pixels are structured and stored in the identification space by the background color storage means. A set of the background image data in the identification space is referred to as background color region. Next, input image data including the background region and object region imaged by the imaging means is obtained. Then, distances between the color gradation values of the pixels of the input image data and the background color region are calculated. Based on the calculated distances, the color gradation values of the pixels of the input image data are identified whether they belong to the background color region or color regions other than the background by the class identification means. When the color gradation values of the pixels are determined to belong to the color regions other than the background by the class identification means, the color gradation values of the pixels and the coordinates of the pixels are structured and stored in the identification space by the object color storage means.
   In other words, a plurality of background image data can be utilized, and the coordinates of the pixels and the color gradation values of the pixels in the image data are structured and stored in the identification space. Thus, not only color information but also position information is retrieved. As a result, not only a constant background change but also a rapid and large change in illumination can be handled, and detection of a small difference in the background colors and the target colors becomes possible.
(2) An image processing device is an image processing device (1), and the color gradation values of the image data are preferably represented in YUV format.
   According to such a structure, colors of the image data are represented by intensity signal, Y, and color signals, U and V By allocating more data amount to the intensity signal Y, a high data compression rate can be obtained with less degradation in image quality.
(3) An image processing device is an image processing device (1), and the color gradation values of the image data are preferably represented in RGB format.
   According to such a structure, colors of the image data are represented by three primary colors of light, R (red), G (green) and B (blue). The RGB format is used for scanners, monitors, digital cameras, color televisions and the like, and thus, it is very versatile. Furthermore, in a full color, colors are represented with RGB being respectively separated into 256 gradations, so color representation of 16,777,216 colors is possible.
(4) An image processing device is an image processing device (1), and the color gradation values of the image data are preferably represented in a gray scale.
   According to such a structure, colors of the image data are represented by a gray scale based on difference in brightness. The images are represented by the difference in the brightness ranging from white to black. Thus, an information amount for designating the colors can be smaller compared to color images. As a result, a process for identifying the colors can be performed rapidly.
(5) An image processing device is any of image processing devices (1) through (4), and nearest neighbor classification is preferably used for identifying whether the color gradation values of the pixels of the input image data belong to the background color region or color regions other than the background in the class identifying means.
   According to such a structure, whether the background region or the region other than the background has the point closes to the color gradation values of the pixels are determined by the nearest neighbor classification in the identification space. Identification is performed by the nearest neighbor classification, which is typically used in the field of identification. Thus, efficient algorithm which has been developed can be effectively utilized.
(6) An image processing device is any of image processing devices (1) through (5), and a hash table is preferably used for identifying whether the color gradation values of the pixels of the input image data belong to the background color region or color regions other than the background in the class identifying means.
   According to such a structure, direct access from a key object to the associated object becomes possible. This allows a high-speed processing even when a data amount increases because access from the key object to the associated object is rapid.
(7) An image processing device is any of image processing devices (1) through (6), and, when the color gradation values of the pixels are determined to belong to the background color region by the class identification means, if distances between the color gradation values of the pixels and the background color region in the identification space are larger than a predetermined threshold, it is preferably determined that the color gradation values of the pixels are included in the color regions other than the background, and the color gradation values of the pixels and the coordinates of the pixels are preferably structured and stored in the identification space.
   According to such a structure, even when the color gradation values of the pixels are determined to belong to the background color region by the class identification means, if the distances between the color gradation values of the pixels and the background color region in the identification space are larger than the predetermined threshold, it is re-determined that they are included in the color regions other than the background. By changing the threshold, criteria for identification can be controlled. Thus, even when there is a change in the background regions, optimal identification can be readily performed by adjusting the threshold.
(8) An image processing device is any of image processing devices (1) through (7), and, for structuring and storing the color gradation values of the pixels and the coordinates of the pixel in the identification space in the background color storage means or object color storage means, color gradation values of a plurality of pixels approximate to each other are preferably collectively stored at a coordinate of one pixel.
   According to such a structure, color gradation values of a plurality of pixels approximate to each other are preferably collectively structured and stored at a coordinate of one pixel in the identification space. Thus, information on coordinates of the pixels can be consolidated to one place without substantially reducing the amount. This allows an efficient processing without substantially reducing information on the coordinates of the pixels. Therefore, the speed of calculation is increased, and also, an amount of memory required can be small.
(9) An image processing device is any of image processing devices (1) through (8), and, for structuring and storing the color gradation values of the pixels and the coordinates of the pixel in the identification space in the background color storage means or object color storage means, the color gradation values are preferably multiplied by a certain value and stored.
   According to such a structure, the color gradation values of the pixels can be compressed without substantially reducing the information on the color gradations. This allows an efficient processing without substantially reducing information on the color gradations. Therefore, the speed of calculation is increased, and also, an amount of memory required can be small.
(10) An image processing device is any of image processing devices (1) through (9), and, for structuring and storing the color gradation values of the pixels and the coordinates of the pixel in the identification space in the background color storage means or object color storage means, the color gradation values of the pixel and the coordinates of the pixels are preferably structured and stored by using coordinates of the pixels obtained by multiplying coordinate axes which designate the coordinates of the pixels by a predetermined weight.
   According to such a structure, distances in the space coordinates are modified by multiplying coordinate axes which designate the coordinates of the pixels by a predetermined weight. In this way, relationship between the space coordinates and the distances in the color gradation space in the identification space is modified. The distances between axes based on information of different amounts, i.e., image coordinates xy and color gradations YUV are weighted for adjustment. This allows appropriate identification.
(11) As described above, an image processing method according to the present invention preferably includes: imaging step for imaging a predetermined region and converting into image data; background color storing step for structuring and storing coordinates of pixels in background image data consisting of a background region imaged by a process at the imaging step and color gradation values of the pixels in an identification space and forming a background color region; class identifying step for calculating distances between the color gradation values of the pixels in input image data formed of a background region and an object region imaged by a process at the imaging step and the background color region in the identification space and identifying whether the color gradation values of the pixels of the input image data belong to the background color region or color regions other than the background based on the calculated distances; and object color storing step for structuring and storing the color gradation values of the pixels and coordinates of the pixels when the color gradation values of the pixels are determined to belong to the color regions other than the background by a process at the class identifying step.
   According to such a structure, by integrating the background difference method and the color detection method, an image processing method which can handle not only a constant background change but also a rapid and large change in illumination, and can detect a small difference in the background colors and the target colors can be provided.
(12) As described above, a computer readable recording medium according to the present invention is preferably a computer readable recording medium including a program to be run on a computer to carry out the steps including: imaging step for imaging a predetermined region and converting into image data; background color storing step for structuring and storing coordinates of pixels in background image data consisting of a background region imaged by a process at the imaging step and color gradation values of the pixels in an identification space and forming a background color region; class identifying step for calculating distances between the color gradation values of the pixels in input image data formed of a background region and an object region imaged by a process at the imaging step and the background color region in the identification space and identifying whether the color gradation values of the pixels of the input image data belong to the background color region or color regions other than the background based on the calculated distances; and object color storing step for structuring and storing the color gradation values of the pixels and coordinates of the pixels when the color gradation values of the pixels are determined to belong to the color regions other than the background by a process at the class identifying step.
   According to such a structure, by integrating the background difference method and the color detection method, a recording medium including a computer readable program which relates to an image processing method which can handle not only a constant background change but also a rapid and large change in illumination, and can detect a small difference in the background colors and the target colors can be provided.
(13) As described above, a program according to the present invention is preferably a program to be run on a computer to carry out the steps including: imaging step for imaging a predetermined region and converting into image data; background color storing step for structuring and storing coordinates of pixels in background image data consisting of a background region imaged by a process at the imaging step and color gradation values of the pixels in an identification space and forming a background color region; class identifying step for calculating distances between the color gradation values of the pixels in input image data formed of a background region and an object region imaged by a process at the imaging step and the background color region in the identification space and identifying whether the color gradation values of the pixels of the input image data belong to the background color region or color regions other than the background based on the calculated distances; and object color storing step for structuring and storing the color gradation values of the pixels and coordinates of the pixels when the color gradation values of the pixels are determined to belong to the color regions other than the background by a process at the class identifying step.

According to such a structure, by integrating the background difference method and the color detection method, a program which relates to an image processing method which can handle not only a constant background change but also a rapid and large change in illumination, and can detect a small difference in the background colors and the target colors can be provided.

The present invention has been described in details. However, in all aspects, the above descriptions are merely for illustrating, and the present invention is not limited to such descriptions. It is construed that a numerous variations not shown may be reached without departing from the scope of the present invention.

## Claims

1. An image processing device comprising:
imaging means for imaging a predetermined region and converting into image data;
background color storage means for structuring and storing coordinates of pixels in background image data consisting of a background region imaged by the imaging means and color gradation values of the pixels in an identification space and forming a background color region;
class identification means for calculating distances between the color gradation values of the pixels in input image data formed of a background region and an object region imaged by the imaging means and the background color region in the identification space and identifying whether the color gradation values of the pixels of the input image data belong to the background color region or color regions other than the background based on the calculated distances; and
object color storage means for structuring and storing the color gradation values of the pixels and coordinates of the pixels when the color gradation values of the pixels are determined to belong to the color regions other than the background by the class identification means.

2. An image processing device according to claim 1, wherein the color gradation values of the image data are represented in YUV format.

3. An image processing device according to claim 1, wherein the color gradation values of the image data are represented in RGB format.

4. An image processing device according to claim 1, wherein the color gradation values of the image data are represented in a gray scale.

5. An image processing device according to any one of claims 1 through 4, wherein nearest neighbor classification is used for identifying whether the color gradation values of the pixels of the input image data belong to the background color region or color regions other than the background in the class identifying means.

6. An image processing device according to any one of claims 1 through 5, wherein a hash table is used for identifying whether the color gradation values of the pixels of the input image data belong to the background color region or color regions other than the background in the class identifying means.

7. An image processing device according to any one of claims 1 through 6, wherein, when the color gradation values of the pixels are determined to belong to the background color region by the class identification means, if distances between the color gradation values of the pixels and the background color region in the identification space are larger than a predetermined threshold, it is determined that the color gradation values of the pixels are included in the color regions other than the background, and the color gradation values of the pixels and the coordinates of the pixels are structured and stored in the identification space.

8. An image processing device according to any one of claims 1 through 7, wherein, for structuring and storing the color gradation values of the pixels and the coordinates of the pixel in the identification space in the background color storage means or object color storage means, color gradation values of a plurality of pixels approximate to each other are collectively stored at a coordinate of one pixel.

9. An image processing device according to any one of claims 1 through 8, wherein, for structuring and storing the color gradation values of the pixels and the coordinates of the pixel in the identification space in the background color storage means or object color storage means, the color gradation values are multiplied by a certain value and stored.

10. An image processing device according to any one of claims 1 through 9, wherein, for structuring and storing the color gradation values of the pixels and the coordinates of the pixel in the identification space in the background color storage means or object color storage means, the coordinates of the pixels and the color gradation values of the pixel are structured and stored in the identification space by using coordinates of the pixels obtained by multiplying coordinate axes which designate the coordinates of the pixels by a predetermined weight.

11. An image processing method comprising:
imaging step for imaging a predetermined region and converting into image data;
background color storing step for structuring and storing coordinates of pixels in background image data consisting of a background region imaged by a process at the imaging step and color gradation values of the pixels in an identification space and forming a background color region;
class identifying step for calculating distances between the color gradation values of the pixels in input image data formed of a background region and an object region imaged by a process at the imaging step and the background color region in the identification space and identifying whether the color gradation values of the pixels of the input image data belong to the background color region or color regions other than the background based on the calculated distances; and
object color storing step for structuring and storing the color gradation values of the pixels and coordinates of the pixels when the color gradation values of the pixels are determined to belong to the color regions other than the background by a process at the class identifying step.

12. A computer readable recording medium including a program to be run on a computer to carry out the steps including:
imaging step for imaging a predetermined region and converting into image data;
background color storing step for structuring and storing coordinates of pixels in background image data consisting of a background region imaged by a process at the imaging step and color gradation values of the pixels in an identification space and forming a background color region;
class identifying step for calculating distances between the color gradation values of the pixels in input image data formed of a background region and an object region imaged by a process at the imaging step and the background color region in the identification space and identifying whether the color gradation values of the pixels of the input image data belong to the background color region or color regions other than the background based on the calculated distances; and
object color storing step for structuring and storing the color gradation values of the pixels and coordinates of the pixels when the color gradation values of the pixels are determined to belong to the color regions other than the background by a process at the class identifying step.

13. A program to be run on a computer to carry out the steps including:
imaging step for imaging a predetermined region and converting into image data;
background color storing step for structuring and storing coordinates of pixels in background image data consisting of a background region imaged by a process at the imaging step and color gradation values of the pixels in an identification space and forming a background color region;
class identifying step for calculating distances between the color gradation values of the pixels in input image data formed of a background region and an object region imaged by a process at the imaging step and the background color region in the identification space and identifying whether the color gradation values of the pixels of the input image data belong to the background color region or color regions other than the background based on the calculated distances; and
object color storing step for structuring and storing the color gradation values of the pixels and coordinates of the pixels when the color gradation values of the pixels are determined to belong to the color regions other than the background by a process at the class identifying step.
